# EUROPEAN PATENT APPLICATION

(11) **EP 4 583 292 A1**
(43) Date of publication of application: **09.07.2025**
(21) Application number: 23860218.9
(22) Date of filing: 25.08.2023
(51) Int. Cl.: H01M 50/367, H01M 50/204, H01M 50/271, H01M 50/317, H01M 50/35

(54) **BATTERY PACK**

(30) Priority: 02.09.2022 JP 2022139756; 02.09.2022 JP 2022139757
(71) Applicant: AESC Japan Ltd., Kanagawa, 2520012 (JP)
(72) Inventor: TAKAGI, Gentarou, Zama-shi, Kanagawa 252-0012 (JP); YOSHIOKA, Shinichi, Zama-shi, Kanagawa 252-0012 (JP)
(74) Representative: Mathys & Squire
(86) International application number: PCT/JP2023/030739
(87) International publication number: WO 2024/048456

(57) **Abstract**

A battery pack (10) includes an accommodation body (200) defining an accommodation space (250) in which a battery module (100) is accommodated, a central interior space (260) through which gas generated from the accommodation space (250) passes, and a plurality of large communicating holes (270L) and a plurality of small communicating holes (270S) through which the accommodation space (250) and the central interior space (260) communicate with each other, and a pressure relief valve (280) for discharging the gas from the central interior space (260) to the exterior space. The length of the central interior space (260) between the pressure relief valve (280) and each of the large communicating holes (270L) is greater than the length of the central interior space (260) between the pressure relief valve (280) and each of the small communicating holes (270S).

## Description

### TECHNICAL FIELD

The present invention relates to a battery pack.

### BACKGROUND ART

In recent years, battery packs used for various purposes such as automobiles have been developed. A battery pack includes at least one battery module and an accommodation body in which the at least one module is accommodated.

Patent Document 1 describes one example of a battery pack. In the battery pack, an accommodation body includes a gas passage through which gas generated from a battery module passes.

### RELATED DOCUMENT

### PATENT DOCUMENT

Patent Document 1: Japanese Unexamined Patent Application Publication (Translation of PCT Application) No. 2022-515674

### DISCLOSURE OF THE INVENTION

### TECHNICAL PROBLEM

For example, as described in Patent Document 1, gas generated from a battery module may be discharged from an accommodation body. The gas may become relatively high in temperature. Simply discharging the high temperature gas from the accommodation body may make it difficult to suppress an influence on a person and a member around the accommodation body.

One example of an object of the present invention is to suppress the temperature of gas discharged from an accommodation body. Another object of the present invention will become apparent from description in the present specification.

### SOLUTION TO PROBLEM

An aspect of the present invention is as follows.
[1] A battery pack including:
   a battery module;
   an accommodation body defining an accommodation space in which the battery module is accommodated, an interior space through which gas generated from the accommodation space passes, and a plurality of communicating holes through which the accommodation space and the interior space communicate with each other; and
   a gas discharge portion for discharging the gas from the interior space to an exterior space, wherein
   a length of the interior space between the gas discharge portion and at least one communicating hole is greater than a length of the interior space between the gas discharge portion and at least another communicating hole smaller than the at least one communicating hole.
[2] The battery pack according to [1], wherein
   the accommodation body defines another interior space located in at least a portion around the interior space.
[3] The battery pack according to [2], further including
   a fastener that fastens predetermined portions of the accommodation body to each other, wherein
   at least a portion of the fastener enters the another interior space.
[4] A battery pack including:
   a battery module;
   an accommodation body defining an accommodation space in which the battery module is accommodated, and an interior space through which gas generated from the accommodation space passes; and
   a cooling structure located in at least a portion of the accommodation body around the interior space, the cooling structure being for cooling the gas.
[5] The battery pack according to [4], wherein
   the cooling structure includes another interior space.
[6] The battery pack according to [4] or [5], further including
   a fastener that fastens predetermined portions of the accommodation body to each other, wherein
   at least a portion of the fastener enters the cooling structure.

### ADVANTAGEOUS EFFECTS OF INVENTION

According to the aspect of the present invention described above, the temperature of the gas discharged from the accommodation body can be suppressed.

### BRIEF DESCRIPTION OF THE DRAWINGS

[Fig. 1] A perspective view of a battery pack according to an embodiment.
[Fig. 2] A plan view of the battery pack according to the embodiment with an upper case removed.
[Fig. 3] A plan view of a portion of the battery pack according to the embodiment.
[Fig. 4] An inner side view of a side frame viewed from the arrow A in Fig. 3.
[Fig. 5] An inner side view of the side frame viewed from the arrow B in Fig. 3.
[Fig. 6] A cross-sectional view of a portion of the battery pack taken along the line C-C in Fig. 3.
[Fig. 7] A cross-sectional view of a portion of the battery pack taken along the line D-D in Fig. 3.

### DESCRIPTION OF EMBODIMENTS

Hereinafter, an embodiment according to the present invention is described using the drawings. In all the drawings, a similar component is assigned with a similar reference sign, and description thereof is omitted as appropriate.

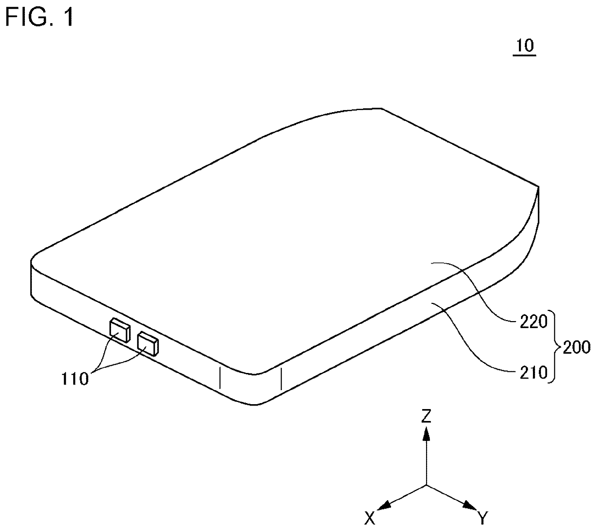

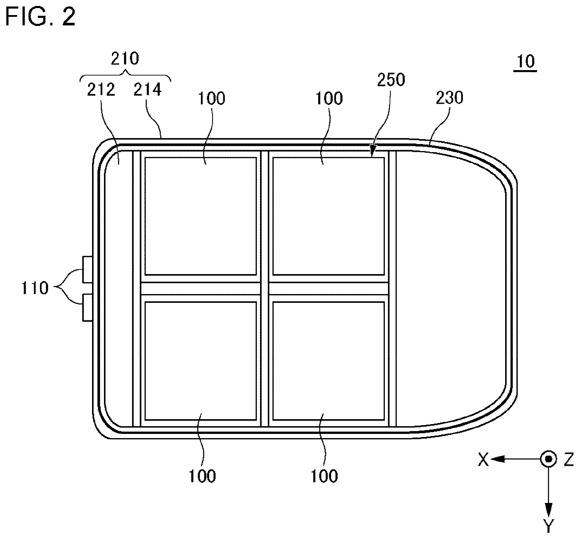

Fig. 1 is a perspective view of a battery pack 10 according to an embodiment. Fig. 2 is a plan view of the battery pack 10 according to the embodiment with an upper case 220 removed.

In the embodiment, the battery pack 10 is mounted on an automobile. Specifically, the battery pack 10 is mounted between a front wheel and a rear wheel of the automobile. Hereinafter, unless otherwise specified, the battery pack 10 is described as being mounted on the automobile. However, the battery pack 10 is also applicable to a purpose other than an automobile.

In each figure, an X direction, a Y direction, and a Z direction are illustrated for description. The X direction indicates a front-rear direction of the battery pack 10. The Y direction is orthogonal to the X direction. The Y direction indicates a left-right direction of the battery pack 10. The Z direction is orthogonal to both the X direction and the Y direction. The Z direction indicates an upward-downward direction of the battery pack 10. The arrow pointing in the X direction, and the arrows pointing in the Y direction and pointing in the Z direction indicate a front direction, a left direction, and an upward direction of the battery pack 10, respectively. In Fig. 2, the white circle with a black dot indicating the Z direction indicates that the arrow pointing to the Z direction extends from the back to the front of the paper. However, the relationship between the X direction, the Y direction, and the Z direction, and the front-rear direction, the left-right direction, and the upward-downward direction of the battery pack 10 are not limited to this example.

In the embodiment, the front-rear direction, the left-right direction, and the upward-downward direction of the battery pack 10 are determined by the automobile on which the battery pack 10 is mounted. The X direction, the Y direction, and the Z direction indicate the front-rear direction, the left-right direction, and the upward-downward direction of the automobile, respectively. The arrow pointing in the X direction, the arrow pointing in the Y direction, and the arrow pointing in the Z direction indicate the front direction, the left direction, and the upward direction of the automobile, respectively. However, the relationship between the front-back direction, the left-right direction, and the upward-downward direction of the battery pack 10, and the front-back direction, the left-right direction, and the upward-downward direction of the automobile are not limited to this example.

Hereinafter, a direction perpendicular to the Z direction is referred to as a horizontal direction according to necessity.

The battery pack 10 includes four battery modules 100 and an accommodation body 200. The four battery modules 100 include a pair of the battery modules 100 on the left side arranged in the X direction and a pair of the battery modules 100 on the right side arranged in the X direction. The accommodation body 200 includes a lower case 210 and an upper case 220. The lower case 210 may also be generally referred to as, for example, a tray or a main body unit. The lower case 210 includes a lower plate 212 and a side frame 214. The upper case 220 may also be generally referred to as, for example, a cover or a lid portion.

Each of the battery modules 100 includes a plurality of battery cells stacked in the horizontal direction. In each of the battery modules 100, for example, a plurality of battery cell groups including a plurality of battery cells connected in parallel are connected in series. Alternatively, a plurality of single battery cells may be connected in series.

A pair of the terminals 110 is provided in front of the side frame 214. The pair of the terminals 110 is arranged substantially parallel in the Y direction. The front end portion of each of the terminals 110 projects forward from the front surface of the side frame 214. In an electric path, the four battery modules 100 are connected in series between a pair of the terminals 110.

The lower case 210 and the upper case 220 are attached to each other via a seal member 230. The lower case 210, the upper case 220, and the seal member 230 form an accommodation space 250. The accommodation space 250 accommodates the four battery modules 100.

The lower plate 212 defines a bottom portion of the accommodation space 250. The side frame 214 defines a side portion of the accommodation space 250. Specifically, the side frame 214 is provided along an outermost circumference of the lower plate 212 when viewed from the Z direction. The upper case 220 defines a top portion of the accommodation space 250.

The seal member 230 is, for example, an elastic material such as rubber. The seal member 230 is provided over the entire circumference of the side frame 214 when viewed from the Z direction. Thereby, the seal member 230 surrounds the accommodation space 250 when viewed from the Z direction. Accordingly, the accommodation space 250 can be sealed from a space outside the accommodation body 200 by the seal member 230.

The number and arrangement of battery modules are not limited to the example according to the embodiment. For example, the number of the battery modules 100 may be only two, only three, or five or more.

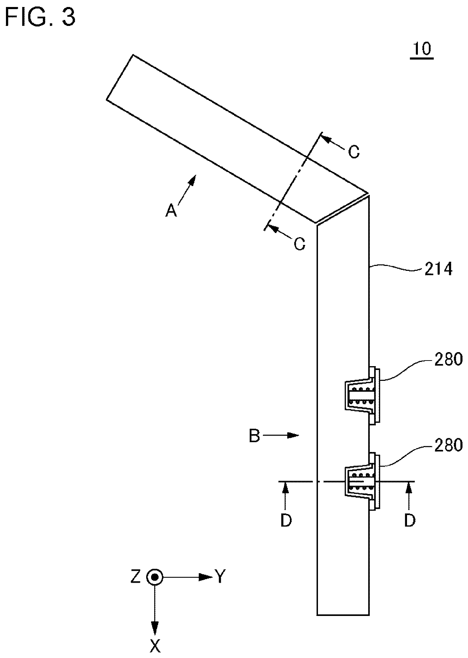

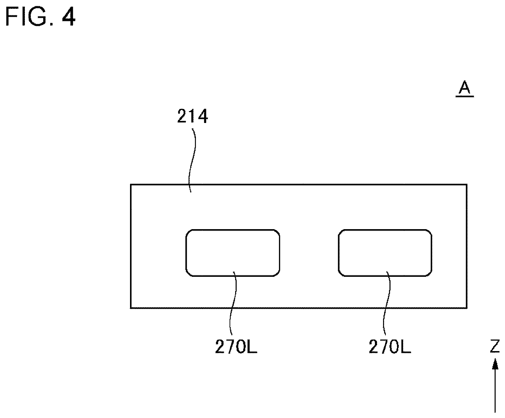

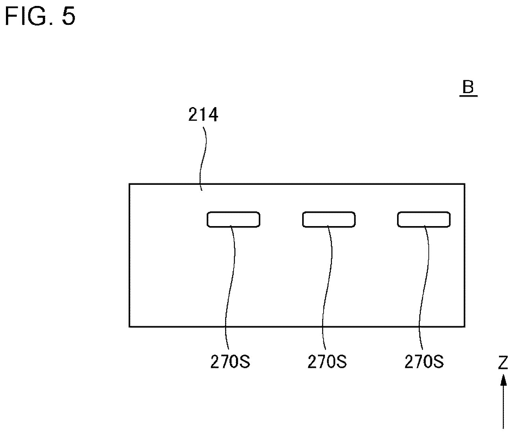

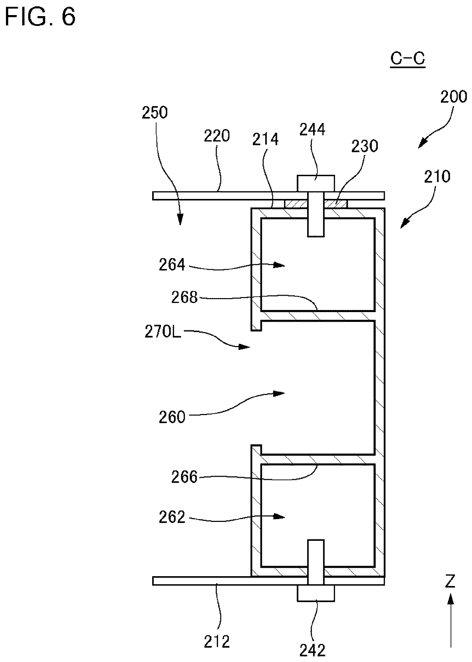

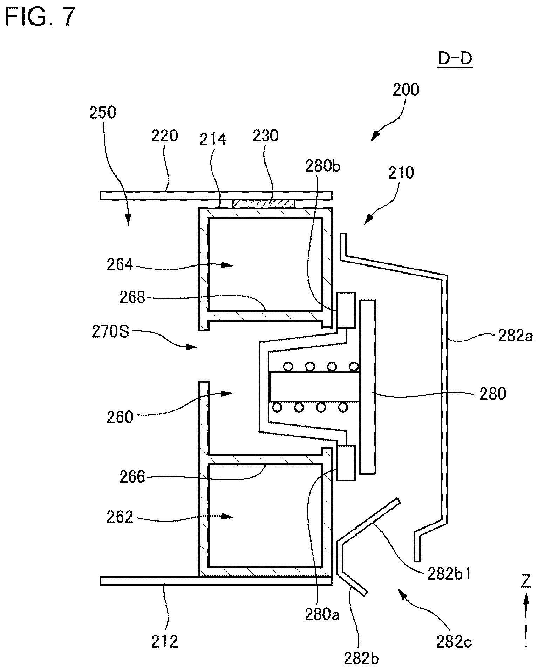

Fig. 3 is a plan view of a portion of the battery pack 10 according to the embodiment. Fig. 4 is an inner side view of the side frame 214 viewed from the arrow A in Fig. 3. Fig. 5 is an inner side view of the side frame 214 viewed from the arrow B in Fig. 3. Fig. 6 is a cross-sectional view of a portion of the battery pack 10 taken along the line C-C in Fig. 3. Fig. 7 is a cross-sectional view of a portion of the battery pack 10 taken along the line D-D in Fig. 3. In Figs. 3, 6, and 7, the battery module 100 accommodated in the accommodation space 250 is not illustrated for simplicity of description.

A fastening structure of the lower plate 212 and the side frame 214 and a fastening structure of the lower plate 212 and the upper case 220 are described with reference to Figs. 6 and 7.

As illustrated in Fig. 6, the outer peripheral portion of the lower plate 212 and the lower portion of the side frame 214 are fastened to each other by a lower bolt 242. For example, the lower bolt 242 is fastened to a nut provided on the side frame 214. In the embodiment, a plurality of the lower bolts 242 are provided over the entire circumference of the side frame 214 when viewed from the Z direction. However, the number of the lower bolts 242 provided over the entire circumference of the side frame 214 may be only one. The fastener that fastens the lower plate 212 and the side frame 214 to each other is not limited to the lower bolt 242. Examples of the fastener include not only a bolt but also a screw.

As illustrated in Fig. 6, the upper portion of the side frame 214 and the outer peripheral portion of the upper case 220 are fastened to each other by an upper bolt 244 via the seal member 230. In an example illustrated in Fig. 6, the upper bolt 244 extends through the seal member 230 substantially parallel to the Z direction. For example, the upper bolt 244 is fastened to a nut provided on the side frame 214. In the embodiment, a plurality of the upper bolts 244 are provided over the entire circumference of the side frame 214 when viewed from the Z direction. However, the number of the upper bolts 244 provided over the entire circumference of the side frame 214 may be only one. The fastener that fastens the side frame 214 and the upper case 220 to each other is not limited to the upper bolt 244. Examples of the fastener include not only a bolt but also a screw.

The side frame 214 is described with reference to Figs. 3 to 7. The side frame 214 defines a central interior space 260, a lower interior space 262, an upper interior space 264, a plurality of large communicating holes 270L, and a plurality of small communicating holes 270S. As illustrated in Figs. 3 and 7, a plurality of pressure relief valves 280 are provided on the outer surface of the side frame 214.

As illustrated in Figs. 6 and 7, the central interior space 260 is located substantially at the center of the side frame 214 in the Z direction. The central interior space 260 extends over at least a portion of the entire circumference of the side frame 214 when viewed from the Z direction. In the embodiment, when viewed from the Z direction, the central interior space 260 extends continuously between a region indicated by the arrow A of the side frame 214 and a region indicated by the arrow B of the side frame 214. In the embodiment, when viewed from the Z direction, the central interior space 260 may be partially interrupted, except between the region indicated by the arrow A of the side frame 214 and the region indicated by the arrow B of the side frame 214.

The accommodation space 250 and the central interior space 260 communicate with each other via a plurality of large communicating holes 270L and a plurality of small communicating holes 270S. The central interior space 260 allows passage of the gas generated from the accommodation space 250. For example, in a predetermined condition such as charging and discharging of the battery module 100, there is a possibility that high temperature gas is generated from the battery module 100. For example, the central interior space 260 allows passage of the high temperature gas generated from the accommodation space 250. However, an example of gas allowed to pass through the central interior space 260 is not limited to the high temperature gas.

The gas generated from the accommodation space 250 enters the central interior space 260 through a plurality of the large communicating holes 270L and a plurality of the small communicating holes 270S. The size of each of the small communicating holes 270S viewed from the arrow B illustrated in Fig. 3 is smaller than the size of each of the large communicating holes 270L viewed from arrow A illustrated in Fig. 3. In the embodiment, as illustrated in Fig. 4, each of the large communicating holes 270L has a substantially quadrilateral shape when viewed from the arrow A. As illustrated in Fig. 5, each of the small communicating holes 270S has a substantially quadrilateral shape when viewed from the arrow B; however, the shape of each of the large communicating holes 270L and a shape of each of the small communicating holes 270S are not limited to this example. When the pressure inside the central interior space 260 exceeds a certain value due to a factor such as generation of the gas from the accommodation space 250, each of the pressure relief valves 280 operates to discharge the gas to the exterior space via each of the pressure relief valves 280. In this way, the pressure relief valve 280 operates as a gas discharge portion. The gas discharge portion to have the gas passing through the central interior space 260 discharged to the exterior space is not limited to the pressure relief valve 280.

As illustrated in Figs. 6 and 7, the lower interior space 262 is located below the central interior space 260. In the embodiment, the lower interior space 262 is a hollow space. The lower interior space 262, therefore, can function as a cooling structure to cool the gas passing through the central interior space 260. This can suppress the temperature of the gas discharged from the pressure relief valve 280 via the central interior space 260. Further, the side frame 214 can be lighter when the lower interior space 262 is a hollow space than when the lower interior space 262 is solid.

As illustrated in Fig. 6, the tip of the lower bolt 242 enters the lower interior space 262. The central interior space 260 and the lower interior space 262 are physically separated from each other via a lower partition wall 266 in at least a portion of the entire circumference of the side frame 214. This can make the tip of the lower bolt 242 less susceptible to the high temperature gas passing through the central interior space 260. The lower partition wall 266 may be partially interrupted in the entire circumference of the side frame 214. For example, the lower partition wall 266 may be provided in a region that overlaps with the lower bolt 242 in the Z direction and may not be provided in at least a portion of the region that does not overlap with the lower bolt 242 in the Z direction.

The lower interior space 262 may be solid with a refrigerant such as liquid. Also in this case, the lower interior space 262 can function as a cooling structure to cool the gas passing through the central interior space 260. The cooling structure is not limited to the lower interior space 262.

As illustrated in Figs. 6 and 7, the upper interior space 264 is located above the central interior space 260. In the embodiment, the upper interior space 264 is a hollow space. The upper interior space 264, therefore, can function as a cooling structure to cool the gas passing through the central interior space 260. This can suppress the temperature of the gas discharged from the pressure relief valve 280 via the central interior space 260. Similar to the lower interior space 262, the upper interior space 264 may be solid with a refrigerant such as liquid.

As illustrated in Fig. 6, the tip of the upper bolt 244 enters the upper interior space 264. The central interior space 260 and the upper interior space 264 are physically separated from each other via an upper partition wall 268 in at least a portion of the entire circumference of the side frame 214. This can make the tip of the upper bolt 244 less susceptible to the high temperature gas passing through the central interior space 260. The upper partition wall 268 may be partially interrupted in the entire circumference of the side frame 214. For example, the upper partition wall 268 may be provided in a region that overlaps with the upper bolt 244 in the Z direction and may not be provided in at least a portion of the region that does not overlap with the upper bolt 244 in the Z direction.

The cross sections of the central interior space 260, the lower interior space 262, and the upper interior space 264 are not limited to examples illustrated in Figs. 6 and 7. The cooling structure described above can be located in at least a portion of a circumference of the central interior space 260. For example, one of the lower interior space 262 and the upper interior space 264 may not exist. The central interior space 260 may be displaced downward or upward from substantially the center of the side frame 214 in the Z direction.

As illustrated in Figs. 3 to 7, in the embodiment, the length of the central interior space 260 between the pressure relief valve 280 and each of the large communicating holes 270L is greater than the length of the central interior space 260 between the pressure relief valve 280 and each of the small communicating holes 270S. In a predetermined condition such as charging and discharging of the battery module 100, fine particles may be generated from the battery module 100 together with high temperature gas. The gas and the fine particles pass together through the central interior space 260. In this case, the greater period during which the gas and the fine particles pass through the central interior space 260 can reduce the temperature of the gas by the fine particles. For this reason, the fine particles described above can lower the temperature of the gas entering the central interior space 260 from the large communicating hole 270L more easily than the temperature of the gas entering the central interior space 260 from the small communicating hole 270S.

In the embodiment, when a relatively large amount of gas is generated from the accommodation space 250, the gas can be discharged via both the large communicating hole 270L and the small communicating hole 270S. In this case, the difference in size between each of the large communicating holes 270L and each of the small communicating holes 270S allows the amount of gas entering the central interior space 260 from the large communicating hole 270L to be greater than the amount of gas entering the central interior space 260 from the small communicating hole 270S. Thus, in the embodiment, the temperature of the gas discharged from the pressure relief valve 280 can be suppressed by efficiently lowering the temperature of the gas passing through the central interior space 260 by the fine particle described above.

In the embodiment, when a relatively small amount of gas is generated from the accommodation space 250, the gas can be discharged mainly via the small communicating hole 270S rather than via the large communicating hole 270L. The length of the central interior space 260 from the small communicating hole 270S to the pressure relief valve 280 is less than the length of the central interior space 260 from the large communicating hole 270L to the pressure relief valve 280. Thus, in the embodiment, a small amount of the gas can be efficiently discharged from the pressure relief valve 280 in the initial operation of the pressure relief valve 280.

The communicating hole that allows the accommodation space 250 and the central interior space 260 to communicate with each other is not limited to the large communicating hole 270L and the small communicating hole 270S. For example, the sizes of a plurality of communicating holes may all be the same. The communicating hole may be provided only in one of the region indicated by the arrow A in Fig. 3 and the region indicated by the arrow B in Fig. 3.

With reference to Fig. 7, the pressure relief valve 280 is described.

The pressure relief valve 280 includes a lower attachment surface 280a and an upper attachment surface 280b. The lower attachment surface 280a and the upper attachment surface 280b are attached to the outer surface of the side frame 214.

An outer cover 282a covers at least a portion of the upper portion and at least a portion of the side portion of the pressure relief valve 280. An inner cover 282b covers at least a portion of the lower portion of the pressure relief valve 280. The lower end of the outer cover 282a and the lower end of the inner cover 282b define a discharge opening 282c. The discharge opening 282c is opened substantially downward of the pressure relief valve 280. Accordingly, the gas discharged from the pressure relief valve 280 is discharged substantially below the pressure relief valve 280 via the discharge opening 282c.

The inner cover 282b includes a shielding portion 282b1. At least a portion of the shielding portion 282b1 is located between the lower attachment surface 280a and the discharge opening 282c. In a predetermined condition such as washing of the automobile on which the battery pack 10 is mounted, there is a possibility that high pressure water is injected from outside of the accommodation body 200. In the embodiment, even if the high pressure water is injected from diagonally below the accommodation body 200 toward the discharge opening 282c, the shielding portion 282b1 can function as a structure to prevent the water from being sprayed directly onto the lower attachment surface 280a.

The embodiments according to the present invention have been described above with reference to the drawings, but these are exemplifications of the present invention, and various configurations other than those described above can also be adopted.

This application claims priorities base on Japanese patent application No. 2022-139756, filed on September 2, 2022 and Japanese patent application No. 2022-139757, filed on September 2, 2022, the disclosures of which are incorporated herein in their entirety by reference.

### REFERENCE SIGNS LIST

10 Battery pack, 100 Battery module, 110 Terminal, 200 Accommodation body, 210 Lower case, 212 Lower plate, 214 Side frame, 220 Upper case, 230 Seal member, 242 Lower bolt, 244 Upper bolt, 250 Accommodation space, 260 Central interior space, 262 Lower interior space, 264 Upper interior space, 266 Lower partition wall, 268 Upper partition wall, 270L Large communicating hole, 270S Small communicating hole, 280 Pressure relief valve, 280a Lower attachment surface, 280b Upper attachment surface, 282a Outer cover, 282b Inner cover, 282b1 Shielding portion, 282c Discharge opening

## Claims

1. A battery pack comprising:
a battery module;
an accommodation body defining an accommodation space in which the battery module is accommodated, an interior space through which gas generated from the accommodation space passes, and a plurality of communicating holes through which the accommodation space and the interior space communicate with each other; and
a gas discharge portion for discharging the gas from the interior space to an exterior space, wherein
a length of the interior space between the gas discharge portion and at least one communicating hole is greater than a length of the interior space between the gas discharge portion and at least another communicating hole smaller than the at least one communicating hole.

2. The battery pack according to claim 1, wherein
the accommodation body defines another interior space located in at least a portion around the interior space.

3. The battery pack according to claim 2, further comprising
a fastener that fastens predetermined portions of the accommodation body to each other, wherein
at least a portion of the fastener enters the another interior space.

4. A battery pack comprising:
a battery module;
an accommodation body defining an accommodation space in which the battery module is accommodated, and an interior space through which gas generated from the accommodation space passes; and
a cooling structure located in at least a portion of the accommodation body around the interior space, the cooling structure being for cooling the gas.

5. The battery pack according to claim 4, wherein
the cooling structure includes another interior space.

6. The battery pack according to claim 4 or 5, further comprising
a fastener that fastens predetermined portions of the accommodation body to each other, wherein
at least a portion of the fastener enters the cooling structure.
